# EUROPEAN PATENT SPECIFICATION

(11) **EP 3 361 886 B1**
(45) Date of publication and mention of the grant of the patent: **11.01.2023**
(21) Application number: 16826764.9
(22) Date of filing: 14.10.2016
(51) Int. Cl.: A23N 4/04, A23N 4/22, B26D 3/26

(54) **MULTIPLE-LANE APPARATUS FOR CUTTING AND CORING FRUITS, ESPECIALLY SUITABLE FOR PEACHES**
MEHRFACHLINIENVORRICHTUNG ZUM SCHNEIDEN UND ENTSTEINEN VON OBST, INSBESONDERE PFIRSICHEN
DISPOSITF MULTILIGNES POUR COUPER ET DENOYAUTER DE FRUITS, EN PARTICULIER DE PÊCHES

(30) Priority: 16.10.2015 IT UB20155294
(43) Date of publication of application: 22.08.2018
(73) Proprietor: CTI Foodtech S. R. L., 84090 Montecorvino Pugliano (SA) (IT)
(72) Inventor: CRESCENZO, Biagio, 84090 Montecorvino Pugliano (SA) (IT); DI COCCO, Hernan Javier, Buenos Aires 1605 (AR)
(74) Representative: Cardelli, Guido
(86) International application number: PCT/IB2016/056185
(87) International publication number: WO 2017/064674

(56) References cited:
- WO-A1-2015/136420
- US-A- 2 506 802
- US-A- 2 975 811
- US-A- 3 695 322
- US-A- 4 337 693
- US-B2- 8 973 732

## Description

### Technical Field

The present invention relates to a multiple-lane apparatus for cutting and coring fruits, especially suitable for peaches.

### Background Art

The Italian patent No. 1406549 and the corresponding U.S. Pat. No. 8,973,732, both being granted to one of the two co-inventors, describe a multiple-lane fruit positioning apparatus, especially suitable for peaches, comprising a frame and a fruit flight conveyor traveling in the longitudinal direction of the frame. The fruit holding flights are shaped with a number of recesses sized according to the fruit to be transported and crosswise spaced. Each recess is inferiorly provided with an opening through which a part of the fruit protrudes. The fruit holding flights and the related mesh members form a tape under the working stroke plane of which an orientation device for the fruits is placed that positions a plane containing the suture line of each fruit at right angles with the longitudinal direction, and the stalk cavity thereof facing downwardly.

The above mentioned apparatus demonstrates that almost all the fruits arrive well-oriented to the cutting and pitting station, so that eliminated or limited are all the problems downstream consisting of peaches worked along meridians not coincident with the suture line. As a result, split pits and pit fragments that are very hard to detect and eliminate from peaches, remain in the fruits.

The current cutting and pitting stations for peaches use for pitting knives such that, even if the peaches arrive well-oriented to the cutting and pitting station, there is a risk of an inaccurate cut which leaves the aforesaid split pits and pit fragments in at least a half of the fruit. They are especially dangerous when they stay in peaches intended for very young children. There are also knives for removing the central part of a fruit in a coring process that, however, do not cut a fruit in halves. They are described, for example, in U.S. Pat. Nos. 2,975,811 and 2,506,802.

Furthermore, the U.S. Pat. No. 3,695,322 describes a multiple-lane apparatus for coring peaches, comprising a frame, a conveyor, fruit holding flights driven by the conveyor in the longitudinal direction of the frame, a number of recesses in each fruit holding flight that are sized according to the fruit to be transported and crosswise spaced, and have an opening through which a part of the fruit protrudes, a device for orientation of the fruits that is able to position each fruit with its own plane containing the suture line at right angles to the longitudinal direction and its stalk cavity facing downwards, the device for orientation of the fruits being located under the fruit holding flights forming a working stroke plane, a fruit cutting and coring station having, above said working stroke plane of the fruit holding flights, cylindrical knives and, below said working stroke plane, rotatable knives for separating the pits. U.S. Pat. No. 3,695,322 describes a machine for coring peaches that uses upper and lower knives. These have an aggressive action on the fruits and cause damage to the fruit pulp.

The U.S. Pat. No. 4,337,693 describes an apparatus for coring and cutting peppers including a conveyor arranged to carry individual peppers with the stem upward, and a pepper coring and cutting station, where a pair of blades and a corer descend from above for coring the pepper and cut it through its sides; a second knife is lifted from the bottom through a hole of plates of the conveyor and cuts the center of the pepper below. Further U.S. Pat. No. 4,337,693 describes a coring employing upper and lower knives and not suitable for peaches.

### Summary of the Invention

Therefore, an object of the present invention is to allow the coring of a fruit together with its diametrical cut in two halves without causing damage to the fruit itself.

Another object of the invention is to prevent that pit fragments remain in the two fruit halves obtained as a result of the cut.

A further object is to get a cutting and a coring automatically and simultaneously on multiple fruits.

These objects are achieved by an apparatus in more lines for the cutting and coring of fruits, especially peaches, according to claim 1. According to the invention, the fruit cutting and coring station has below the working stroke plane of the fruit holding flights a plurality of bearing elements that are movable, one for each line of traveling of fruits, in order to support the fruits during the cutting, and a single actuator to move the plurality of bearing elements to each opening during the cutting of the fruit, and to move them away from each opening during the activation of said pushers to allow the ejection of the core.

In one embodiment, the bearing elements are plates keyed to a swinging shaft rotated by an actuator.

In a preferred embodiment, the bearing elements are bored plates on a lower support element vertically movable thanks to second sliding elements on guides fixed to the frame, by means of an actuator which is a pneumatic cylinder mounted on the same frame.

The bearing element which contrasts the cutting action of the knives placed only superiorly behaves like a hand that holds the fruit resting in the recess, allowing, however, the ejection of the core.

Advantageously, in the cutting and coring station each single peach is retained superiorly by a retainer cup.

The cutting unit comprises a cylindrical knife and two diametrical knives functioning as dies. The cylindrical knife has a circular blade that removes a cylindrical central part or core of the fruit, including the pit, and the diametrical knives have side blades which cut the peach in two halves. Thanks to this cutting unit, the pit is not touched, as is the case with the known pitting means, acting by twist or knife, and the risk of finding pit fragments in the finished product is reduced to zero, that is a necessary condition in food for babies and children.

Briefly, the cutting and coring station according to the invention provides a plurality of cutting units, the movable bearing elements of the fruits and pushers for the ejection of the cores.

Conveniently, each recess of the fruit holding flights has a lower opening, already used previously for the orientation of the fruits. At the time of cutting, the movable bearing element compensates the lack of support that would cause damage to the fruit pulp, as the latter would be extruded through the opening. Each movable bearing element comprises a plate that serves as an anvil for the cutting unit which cuts the fruit.

The ejection of the cores takes place by means of the pushers, that are substantially pneumatic cylinders, one for each fruit, so as to expel the cores by pushing them downwards through the plungers connected to the cylinder stems. Each core passes through the opening of the fruit holding recess after the rotation of the plates of the movable bearing elements.

The components of the cutting and coring station are synchronized by means of cams or sensors for a regular operation of the same.

After the cutting and ejection of the core, the halves of the fruits, which proceed on the belt of the conveyor and are discharged from a discharge hopper, are separated automatically from the cores that are pushed below the conveyor recesses and discharged in a different zone of the apparatus according to the present invention.

### Brief Description of Drawings

Further features and advantages of the present invention will become more apparent from the indicative, and therefore non-limiting, description of a preferred but not exclusive embodiment of a multiple-lane apparatus for cutting and coring fruits, especially suitable for peaches, as shown in the accompanying drawings in which:
- Figure 1 is a schematic fragmentary and cut longitudinal cross-section view of a multiple-lane apparatus for positioning fruits according to the prior art;
- Figure 2 is an enlarged partially cross-sectioned fragmentary view of the apparatus in Figure 1, with the addition of a cutting and coring station according to a first embodiment of the present invention in a working position preceding the cutting;
- Figure 3 is an enlarged cross-section view obtained along the line A-A in Figure 2;
- Figure 4 is an enlarged partially cross-sectioned fragmentary view of the apparatus in Figure 1, with the addition of the cutting and coring station according to the first embodiment of the present invention in a working position of cutting;
- Figure 5 is an enlarged partially cross-sectioned fragmentary view of the apparatus in Figure 1, with the addition of the cutting and coring station according to the first embodiment of the present invention in a working position of coring;
- Figure 6 is an enlarged cross-section view obtained according to the line B-B in Figure 5;
- Figures 7, 8 and 9 are a front view, a plan view from below and a side view in enlarged scale, respectively, of a cutting unit according to the present invention;
- Figure 10 is an exploded cross-section view of the cutting unit in Figures 7, 8, and 9;
- Figure 11 is an enlarged partially cross-sectioned fragmentary view of the apparatus in Figure 1, with the addition of a cutting and coring station in accordance with a second embodiment of the present invention in a working position preceding the cutting;
- Figure 12 is an enlarged cross-section view obtained according to the line C-C in Figure 11; and
- Figures 13 and 14 are a side view and a top plan view, respectively, of a bored plate in accordance with the second embodiment of the present invention.

### Description of Invention Embodiments

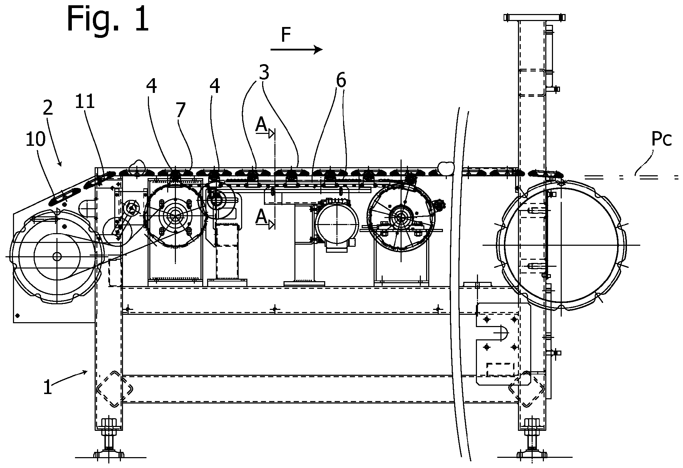

Reference is made initially to Figure 1 that is a schematic fragmentary and cut longitudinal cross-section view of a multiple-lane apparatus for positioning fruits according to the prior art.

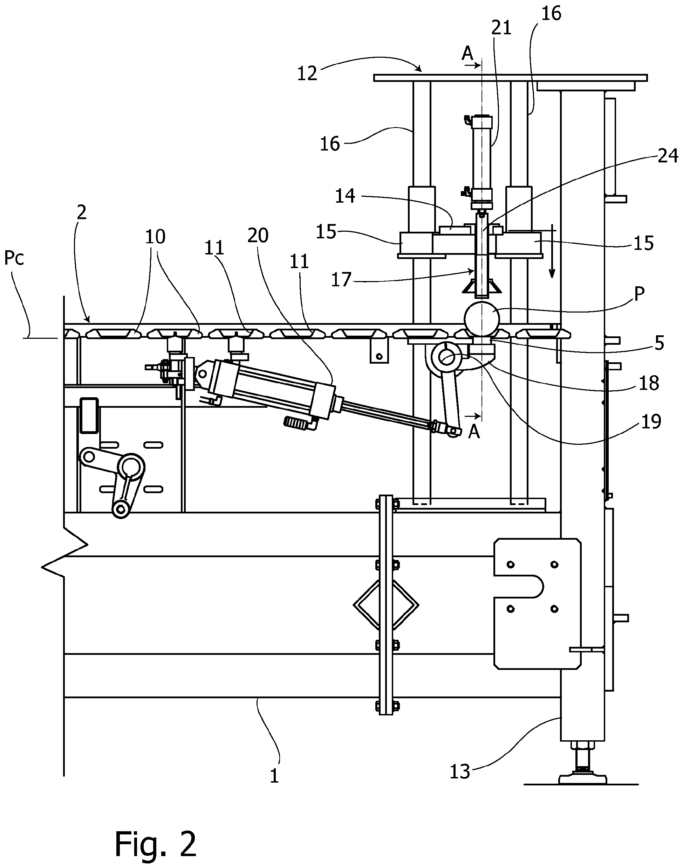

The apparatus can be used for drupes, in particular peaches, and these will be referred to below in this detailed description. The apparatus comprises a frame, generally indicated as 1, and a fruit flight conveyor 2 traveling in the longitudinal direction of the frame 1. The conveyor 2, as called below for simplicity, is constituted, according to the conventional technique, by a plurality of transverse rods 3. The transverse rods 3 are equally spaced longitudinally by a pitch chosen in function of the movement of an intermitting device, here not described. The fruits, in this case peaches, are fed on the conveyor in a supply station (not shown) in the left side in the Figure 1, and travel towards the right, according to the arrow F, to a cutting and coring station, shown in Figures 2 to 6. The transverse rods 3 are connected to each other in the vicinity of the opposite ends in succession by means of mesh elements 6 of a known type. The mesh elements 6 that connect the transverse rods 3, support fruit holding flights 7.

Rollers 4 engage with pairs of wheels 8, 8 and 9, 9, mutually coupled by shafts, at opposite ends of the conveyor 2, on which the tape formed by the fruit holding flights 7 runs that are connected in succession with mesh elements 6. For simplicity, not shown in Figure 1 is the motor having an intermitting device that drives the wheels 9, which are the drive wheels in the conveyor 2. Each fruit holding flight 7 is shaped with a series of recesses 10 that are sized according to the fruit to be carried and transversely spaced. Each recess 10 is inferiorly provided with an opening 11 through which a part of the fruit P projects downwards.

As previously mentioned, the fruit holding flights 7 and the related mesh elements 6 constitute the tape which lies substantially in working stroke plane Pc. Located under the working stroke plane Pc of conveyor belt 2 is a device for orientation of the fruits as known from the cited patent of the same co-inventor and not further described here.

A first embodiment of the apparatus according to the invention is initially described in Figure 2 which is an enlarged partially cross-sectioned fragmentary view of the apparatus in Figure 1, with the addition of a cutting and coring station according to the invention in a working position preceding the cutting. This cutting and coring station, generally indicated as 12, is shown connected to the frame 1 of the apparatus, in particular to an upright 13 thereof. The cutting and coring station comprises, above the working stroke plane Pc of the fruit holding flights, an upper supporting member 14 transversal to said longitudinal direction and movable vertically by means of first sliding elements 15 on guides 16 fixed to the frame 1. For simplicity, the means determining the displacement of the upper supporting member 14 are not shown.

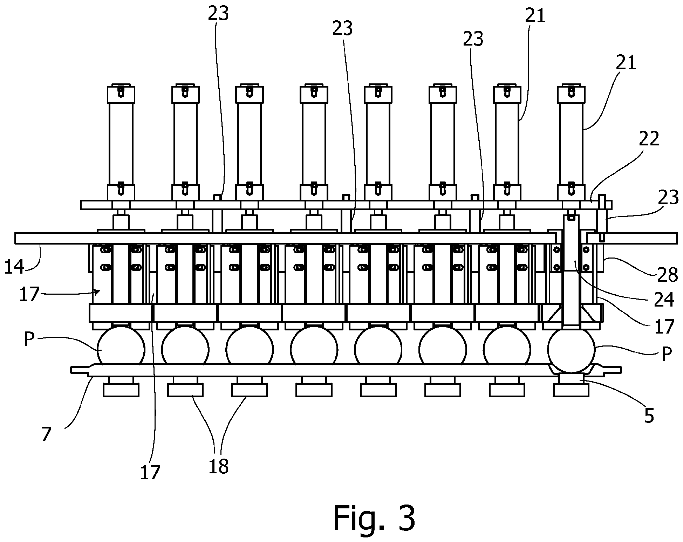

It also refers to figure 3, which is an enlarged cross-section view obtained along the line A-A in Figure 2. In Figure 3, the first sliding elements 15, the guides 16 and the frame 1 of the apparatus are not shown.

One can note that a plurality of cutting units 17 protrudes downward from the upper supporting member 14.

Below the working stroke plane Pc of the fruit holding flights 7, there is a plurality of plates 5 with bearing elements 18, one for each of fruit feeding lane. The bearing elements 18 are keyed on a single swinging shaft 19 driven by means of an actuator 20 so as to move a plate 5 of each bearing element 18 to each opening 11 through which a part of the fruit P during cutting protrudes. The actuator 20 is not described in greater detail. Superiorly to the upper supporting member 14 mounted on an upper horizontal bar 22, which is attached to the upper supporting member 14 by means of pins 23, is a plurality of pushers 21, in the form of pneumatic cylinders. The pushers 21 are provided with plungers 24 mounted on their stems. The plungers 24 pass downward through the upper supporting member 14 along the respective cutting unit 17. The cutting units 17 will be described in greater detail below. Each fruit P is cut when the upper supporting member 14, which supports the cutting units 17, is moved downwards by not shown means.

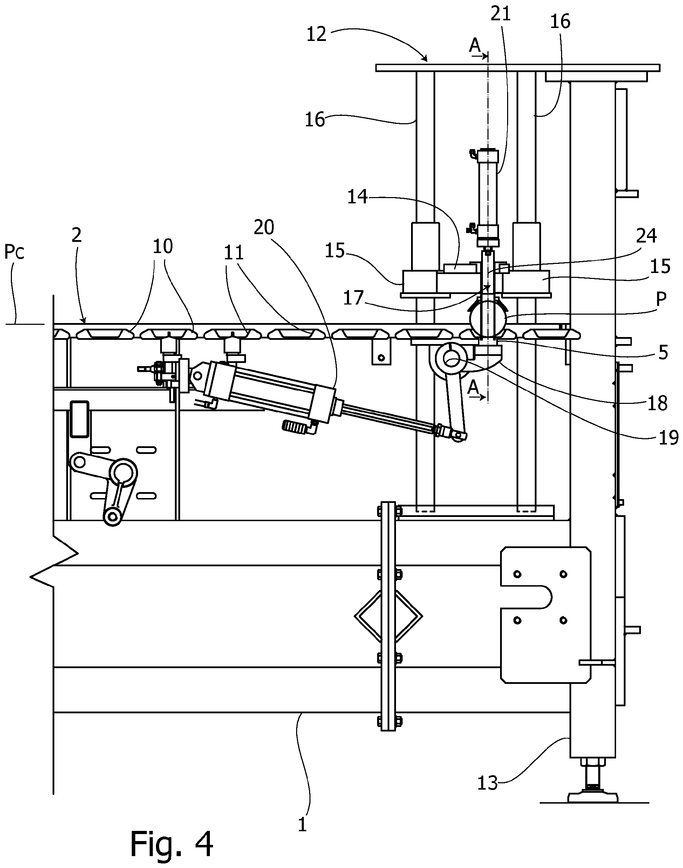

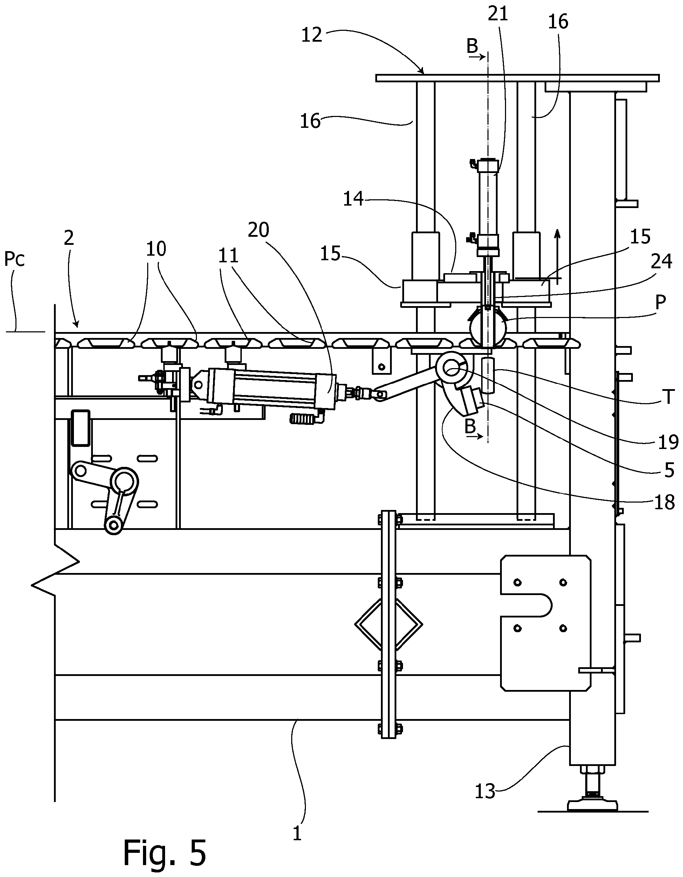

Reference is made now to Figures 4 and 5 which are enlarged partially cross-sectioned fragmentary views of the apparatus with the addition of the cutting and coring station according to a first embodiment of the present invention in a working position of cutting and of coring, respectively.

As above said, the cutting takes place with the movement downwards of the cutting units 17 fixed inferiorly to the upper supporting member 14 whose knives, as described below, penetrate the fruit P while the plate 5 of the respective bearing element 18 closes the opening 11 of the recess (Figure 4). Thereafter, each pusher 21 extends its plunger 24 to drive away downward the core indicated as T.

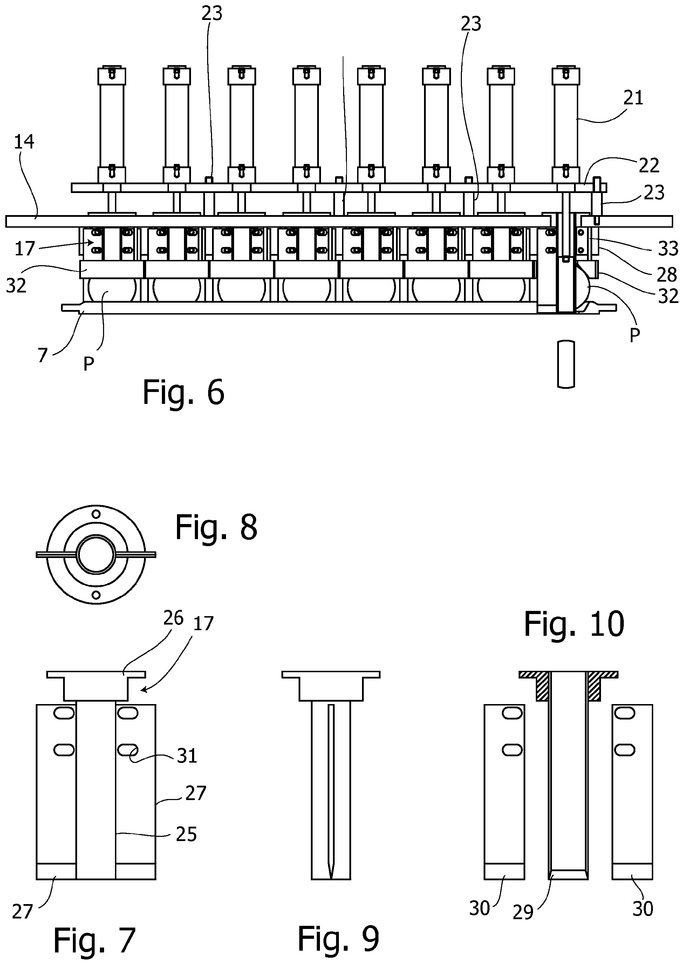

As also shown in Figure 6, which is an enlarged cross-section view obtained along the line B-B of Figure 5, and, in greater detail, in Figures 7, 8 and 9, which are a front view, a plan view from below and a side view in enlarged scale of a cutting unit 17, respectively, according to the first embodiment of the present invention, each cutting unit 17 comprises a cylindrical knife 25 supported by a bushing 26 on the upper supporting member 14, and a pair of diametrical knives 27, 27 mounted externally to the cylindrical knife 25 below the upper supporting member 14 by means of a lower transverse bar 28 (Figures 3 and 6). The cylindrical knife 25 has a lower end provided with a circular blade 29, as best shown in Figure 10, which is an exploded cross-section view of the cutting unit in Figures 7, 8, and 9.

The pair of diametrical knives 27, 27, have individually a lower end equipped with a flat blade 30, 30 and are adjustable in their relative distance on the vertical transverse bar 28 of the upper supporting member 14 by means of screws passing through slots 31 (Figure 7) of the diametrical knives 27, 27.

In a variant the cylindrical knife 25 and diametrical knives 27, 27 can be made in a single piece.

Advantageously, as shown, mounted on the knives is a retaining cup 32 of the fruit P. The retaining cup 32, which may be spring loaded downwards, although not shown, is slidable on vertical guide rods 33.

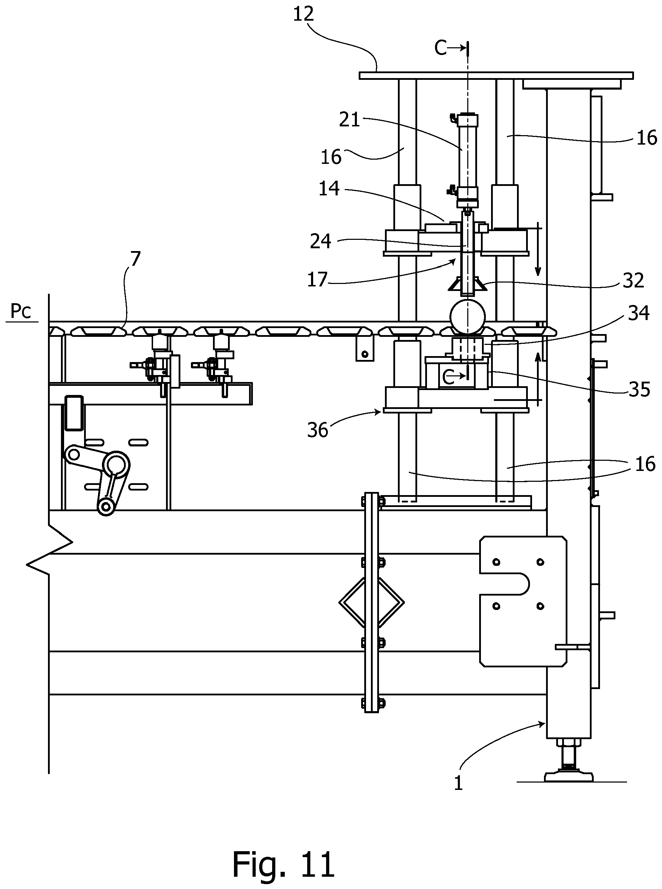

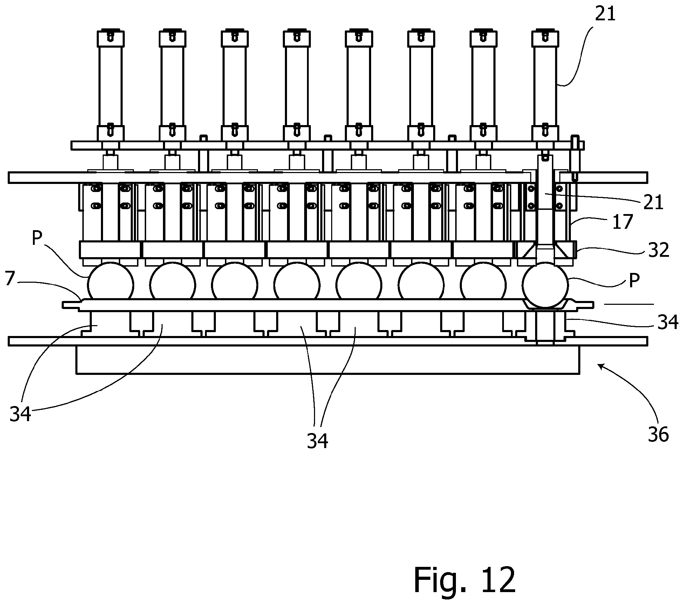

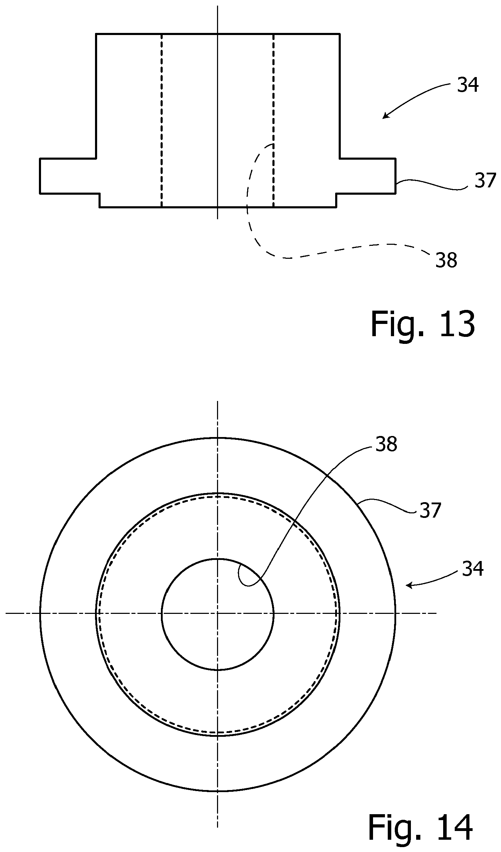

Reference is made now to Figures 11 and 12 which are an enlarged partially cross-sectioned fragmentary view of the apparatus in Figure 1, with the addition of a cutting and coring station in accordance with a second embodiment of the present invention in a working position preceding the cutting, and an enlarged cross-section view obtained according to the line C-C in Figure 11, respectively. Reference numerals similar to those in the first embodiment are used to indicate similar parts. Below the working stroke plane Pc of fruit holding flight 7, there is a plurality of bearing elements 35, one for each of fruit feeding lanes, and a single actuator so as to move each bearing element 35 to each opening 11 during the cutting of the fruit P, and to move it away from each opening 11 during the activation of the pushers 21 to allow the emission of the core T. The bearing elements 35 sustain bored plates 34 and are vertically movable thanks to second sliding elements 36 on guides 16 fixed to the frame 1, by means of an actuator that is a pneumatic cylinder mounted on the same frame 1 and is not shown in the figures. Each bored plate 34, which faces each aperture 11 during the cutting of the fruit P, allows the passage of the core T through a center hole 38 during the activation of the pushers 21 to allow the emission of core T. With reference to figures 13 and 14 the bored plate 34 is shown therein in enlarged scale in a side view and, respectively, in a plan view from above. The bored plate 34 has a lateral flange 37 for its support on the bearing element 35 and the above-mentioned central hole 38 to allow the passage of the core T extracted by the pusher 21.

In both the embodiments above described an easy extraction of the core is permitted.

It should be understood that the movement of the plungers 24 mounted on the stems of pushers 21, may be performed, alternatively, by other mechanisms, such as cams and levers.

Therefore, the foregoing description explains only preferred embodiments of the multiple-lane apparatus for cutting and coring fruits according to the invention, and its scope is defined by the appended claims.

## Claims

1. A multiple-lane apparatus for cutting and coring fruits, especially suitable for peaches, comprising:
- a frame (1),
- a conveyor (2),
- fruit holding flights (7) driven by the conveyor (2) in the longitudinal direction of the frame (1),
- a number of recesses (10) in each fruit holding flight (7) that are sized according to the fruit to be transported and crosswise spaced, and have an opening (11) through which a part of the fruit protrudes,
- a device for orientation of the fruits, able to position each fruit (P) with its own plane containing the suture line at right angles to the longitudinal direction and its stalk cavity facing downwards, the device for orientation of the fruits being located under the fruit holding flights (7), forming a working stroke plane (Pc),
- a fruit cutting and coring station (12) having above said working stroke plane (Pc) of the fruit holding flights (7), an upper supporting member (14) transverse to said longitudinal direction and vertically movable on guides (16) fixed to said frame (1), the upper supporting member (14) supporting inferiorly a plurality of cutting units (17), one for each traveling line of the fruits, each fruit (P) being suitable to be cut when the upper supporting member (14) is moved downwards, each cutting unit (17) comprising a cylindrical knife (25) supported by a bushing (26) on said upper supporting member (14), and a pair of diametrical knives (27) that are mounted externally to the cylindrical knife (25) below said upper supporting member (14) by means of a lower transverse bar (28),
the apparatus being **characterized in that** it further comprises:
above said working stroke plane (Pc) of the fruit holding flights (7):
- a plurality of pushers (21) superiorly supported by the upper supporting member (14) and provided with plungers (24) passing downwards through said upper supporting member (14) along the respective cutting unit (17), and
below said working stroke plane (Pc) of the fruit holding flights (7):
- a plurality of bearing elements (18; 35), that are movable, one for each line of traveling of fruits, in order to support the fruits during the cutting, and
- a single actuator (20) to move the plurality of bearing elements (18; 35) to each opening (11) during the cutting of the fruit (P), and to move them away from it during the activation of said pushers (21) to allow the ejection of the core (T) through said opening (11).

2. The apparatus according to claim 1, **characterized in that** each bearing element (18), which supports a plate (5), is able to rotate as keyed on a shaft (19) suitable to swing, and said actuator (20) is a pneumatic cylinder connected to and able to rotate said shaft (19) in order to bring the plate (5) in correspondence with the opening (11) during the cutting of the fruit (P), and to move the plate (5) away from each opening (11) during the activation of said pushers (21) to allow the ejection of the core (T).

3. The apparatus according to claim 1, **characterized in that** each bearing element (35), which supports a bored plate (34), is movable vertically by a second sliding element (36) on the guides (16), by means of an actuator which is a pneumatic cylinder mounted on the same frame (1) so as to bring the bored plate (34) in correspondence with the opening (11) during the cutting of the fruit (P), and to permit the passage of the core through the bored plate (34) during the activation of said pusher (21) to allow the ejection of the core (T).

4. The apparatus according to claim 1, **characterized in that** said cylindrical knife (25) has a lower end provided with a circular blade (29).

5. The apparatus according to claim 1, **characterized in that** said pair of diametrical knives (27) have singularly a lower end equipped with a flat blade (30).

6. The apparatus according to claim 1, **characterized in that** said pair of diametrical knives (27) are adjustable in their relative distance on said lower transverse bar (28).

7. The apparatus according to claim 1, **characterized in that** said diametrical knives (27) and cylindrical knives (25) are made in one piece.

8. The apparatus according to claim 1, **characterized in that** slidably mounted along said diametrical (27) and cylindrical (25) knives by means of vertical guide rods (33) is a cup retainer (32) of a fruit.

9. The apparatus according to claim 1, **characterized in that** said pushers (21) are pneumatic cylinders that are mounted on an upper horizontal bar (22) above said upper supporting member (14), and provided with a through hole in correspondence with each plunger (24), for its traveling inside the cylindrical knife (25) of each cutting unit (17).

## Patentansprüche

1. Mehrfachlinienvorrichtung zum Schneiden und Entsteinen von Früchten, insbesondere Pfirsichen, umfassend:
- einen Rahmen (1);
- einen Förderer (2);
- Fruchthalteglieder (7), die vom Förderer (2) in der Längsrichtung des Rahmens (1) angetrieben werden;
- eine Reihe von Vertiefungen (10) in einem jeden Fruchthalteglied (7), die nach der zu transportierenden Frucht bemessen und kreuzweise beabstandet sind und eine Öffnung (11) aufweisen, durch die ein Teil der Frucht hervorsteht;
- eine Einrichtung zum Ausrichten der Früchte, die in der Lage ist, eine jede Frucht (P) mit ihrer Ebene, enthaltend die Nahtlinie, an rechten Winkeln zur Längsrichtung und mit ihrem Stielhohlraum nach unten gerichtet zu positionieren, wobei die Einrichtung zum Ausrichten der Früchte unter den Fruchthaltegliedern (7) platziert ist und eine Arbeitshubebene (Pc) formt;
- eine Fruchtschneide- und Entkernungsstation (12), aufweisend über der Arbeitshubebene (Pc) der Fruchthalteglieder (7) ein oberes Stützelement (14), das quer zur Längsrichtung angeordnet und vertikal auf Führungen (16), die am Rahmen (1) fixiert sind, bewegbar ist, wobei das obere Stützelement (14) unterseitig eine Vielzahl von Schneideinheiten (17) stützt, eine jede für jede Verfahrlinie der Früchte, wobei eine jede Frucht (P) geeignet ist, geschnitten zu werden, wenn das obere Stützelement (14) nach unten bewegt wird, wobei eine jede Schneideinheit (17) ein zylindrisches Schneidwerkzeug (25) umfasst, das von einer Buchse (26) auf dem Stützelement (14) gestützt wird, und ein Paar diametraler Schneidwerkzeuge (27), die außenseitig des zylindrischen Schneidwerkzeugs (25) unter dem oberen Stützelement (14) mittels einer unteren Querstange (28) montiert sind,
wobei die Vorrichtung **dadurch gekennzeichnet ist, dass** sie zudem Folgendes umfasst:
oberhalb der Arbeitshubebene (Pc) der Fruchthalteglieder (7):
- eine Vielzahl von Schiebern (21), die oberseitig vom oberen Stützelement (14) gestützt werden und mit Kolben (24) versehen sind, die durch das obere Stützelement (14) entlang der jeweiligen Schneideinheit (17) nach unten führen, und
unterhalb der Arbeitshubebene (Pc) der Fruchthalteglieder (7):
- eine Vielzahl von Lagerelementen (18; 35), die bewegbar sind, jeweils eins für jede Verfahrlinie der Früchte, um die Früchte während des Schneidens zu stützen, und
- einen Einzelantrieb (20), um die Vielzahl von Lagerelementen (18; 35) zu einer jeden Öffnung (11) während des Schneidens der Frucht (P) zu bewegen, und um diese wegführend von ihm während der Aktivierung der Schieber (21) zu bewegen, um den Auswurf des Kerns (T) durch die Öffnung (11) zu erlauben.

2. Vorrichtung nach Anspruch 1, **dadurch gekennzeichnet, dass** ein jedes Lagerelement (18), das eine Platte (5) stützt, in der Lage ist, sich verkeilt an einem Schaft (19), der geeignet ist zu schwingen, zu drehen, und der Antrieb (20) ein Pneumatikzylinder ist, der mit dem Schaft (19) verbunden und in der Lage ist, diesen zu drehen, um die Platte (5) in Übereinstimmung mit der Öffnung (11) während des Schneidens der Frucht (P) zu bringen und die Platte (5) wegführend von einer jeden Öffnung (11) während der Aktivierung der Schieber (21) zu bewegen, um den Auswurf des Kerns (T) zu erlauben.

3. Vorrichtung nach Anspruch 1, **dadurch gekennzeichnet, dass** die Lagerelemente (35), die eine gelochte Platte (34) stützen, durch zweite Gleitelemente (36) auf den Führungen (16) bewegbar sind, mittels eines Antriebs, bei dem es sich um einen Pneumatikzylinder handelt, der auf demselben Rahmen (1) montiert ist, sodass die gelochte Platte (34) in Übereinstimmung mit einer jeden Öffnung (11) während des Schneidens der Frucht (P) gebracht wird, und um den Durchgang des Kerns durch die gelochte Platte (34) während der Aktivierung des Schiebers (21) zu gestatten, um den Auswurf des Kerns (T) zu ermöglichen.

4. Vorrichtung nach Anspruch 1, **dadurch gekennzeichnet, dass** das zylindrische Schneidwerkzeug (25) ein unteres Ende aufweist, das mit einem Kreismesser (29) versehen ist.

5. Vorrichtung nach Anspruch 1, **dadurch gekennzeichnet, dass** das Paar diametraler Schneidwerkzeuge (27) jeweils einzeln ein unteres Ende aufweist, das mit einem Flachmesser (30) versehen ist.

6. Vorrichtung nach Anspruch 1, **dadurch gekennzeichnet, dass** das Paar diametraler Schneidwerkzeuge (27) hinsichtlich seines relativen Abstands auf der unteren Querstange (28) verstellbar ist.

7. Vorrichtung nach Anspruch 1, **dadurch gekennzeichnet, dass** die diametralen Schneidwerkzeuge (27) und die zylindrischen Schneidwerkzeuge (25) in einem Stück ausgebildet sind.

8. Vorrichtung nach Anspruch 1, **dadurch gekennzeichnet, dass** ein Becherhalter (32) einer Frucht verschiebbar entlang der diametralen (27) und zylindrischen (25) Schneidwerkzeuge mittels vertikaler Führungsstäbe (33) montiert ist.

9. Vorrichtung nach Anspruch 1, **dadurch gekennzeichnet, dass** die Schieber (21) Pneumatikzylinder sind, die auf einer oberen horizontalen Stange (22) über den oberen Stützelementen (14) montiert und mit einem Durchführungsloch in Übereinstimmung mit einem jeden Kolben (24) montiert sind, um diesen im zylindrischen Schneidwerkzeug (25) einer jeden Schneideinheit (17) zu verfahren.

## Revendications

1. Dispositif multilignes pour couper et dénoyauter des fruits, particulièrement adapté aux pêches, comprenant :
- un châssis (1),
- un convoyeur (2),
- des plaques de maintien (7) des fruits entraînées par le convoyeur (2) dans la direction longitudinale du châssis (1),
- un certain nombre de renfoncements (10) dans chaque plaque de maintien (7) des fruits qui sont dimensionnés en fonction du fruit à transporter et espacés transversalement, et comportent une ouverture (11) à travers laquelle une partie du fruit dépasse,
- un dispositif d'orientation des fruits, capable de positionner chaque fruit (P) avec son propre plan contenant la ligne de suture à angle droit par rapport à la direction longitudinale et sa cavité pédonculaire orientée vers le bas, le dispositif d'orientation des fruits étant situé sous les plaques de maintien (7) des fruits, formant un plan de course de travail (Pc),
- un poste de coupe et de dénoyautage (12) des fruits comportant au-dessus dudit plan de course de travail (Pc) des plaques de maintien (7) des fruits, un élément de support supérieur (14) transversal à ladite direction longitudinale et mobile verticalement sur des guides (16) fixés audit châssis (1), l'élément de support supérieur (14) supportant inférieurement une pluralité d'unités de coupe (17), une pour chaque ligne de déplacement des fruits, chaque fruit (P) étant apte à être coupé lorsque l'élément de support supérieur (14) est déplacé vers le bas, chaque unité de coupe (17) comprenant un couteau cylindrique (25) supporté par une douille (26) sur ledit élément de support supérieur (14), et une paire de couteaux diamétraux (27) étant montés à l'extérieur du couteau cylindrique (25) sous ledit élément de support supérieur (14) au moyen d'une barre transversale inférieure (28),
le dispositif étant **caractérisé en ce qu'**il comprend de plus :
au-dessus dudit plan de course de travail (Pc) des plaques de maintien (7) des fruits :
- une pluralité de poussoirs (21) supportés supérieurement par l'élément de support supérieur (14) et pourvus de pistons (24) passant vers le bas à travers ledit élément de support supérieur (14) le long de l'unité de coupe (17) respective, et
au-dessous dudit plan de course de travail (Pc) des plaques de maintien (7) des fruits :
- une pluralité d'éléments de support (18 ; 35), étant mobiles, un pour chaque ligne de déplacement des fruits, afin de supporter les fruits pendant la coupe, et
- un actionneur individuel (20) pour déplacer la pluralité d'éléments de support (18 ; 35) vers chaque ouverture (11) pendant la coupe du fruit (P), et pour les éloigner de celle-ci pendant l'activation desdits poussoirs (21) pour permettre l'éjection du noyau (T) à travers ladite ouverture (11).

2. Dispositif selon la revendication 1, **caractérisé en ce que** chaque élément de support (18), qui supporte une plaque (5), est capable de tourner comme étant calé sur un arbre (19) adapté pour pivoter, et ledit actionneur (20) est un cylindre pneumatique relié audit et capable de faire tourner ledit arbre (19) afin d'amener la plaque (5) en correspondance avec l'ouverture (11) pendant la coupe du fruit (P), et de déplacer la plaque (5) en l'éloignant de chaque ouverture (11) pendant l'activation desdits poussoirs (21) pour permettre l'éjection du noyau (T).

3. Dispositif selon la revendication 1, **caractérisé en ce que** ledit élément de support (35), qui supporte une plaque percée (34), est mobile verticalement grâce à des seconds éléments coulissants (36) sur les guides (16), au moyen d'un actionneur qui est un cylindre pneumatique monté sur le même châssis (1) de manière à amener la plaque percée (34) en correspondance avec chaque ouverture (11) pendant la coupe du fruit (P), et à permettre le passage du noyau à travers la plaque percée (34) pendant l'activation dudit poussoir (21) pour permettre l'éjection du noyau (T).

4. Dispositif selon la revendication 1, **caractérisé en ce que** ledit couteau cylindrique (25) comporte une extrémité inférieure pourvue d'une lame circulaire (29).

5. Dispositif selon la revendication 1, **caractérisé en ce que** ladite paire de couteaux diamétraux (27) comporte, pour chacun, une extrémité inférieure équipée d'une lame plate (30).

6. Dispositif selon la revendication 1, **caractérisé en ce que** ladite paire de couteaux diamétraux (27) est réglable dans sa distance relative sur ladite barre transversale inférieure (28).

7. Dispositif selon la revendication 1, **caractérisé en ce que** lesdits couteaux diamétraux (27) et couteaux cylindriques (25) sont réalisés en une seule pièce.

8. Dispositif selon la revendication 1, **caractérisé en ce qu'**il se trouve, montée de manière coulissante le long desdits couteaux diamétraux (27) et cylindrique (25) au moyen de tiges de guidage verticales (33), une coupe de retenue (32) d'un fruit.

9. Dispositif selon la revendication 1, **caractérisé en ce que** lesdits poussoirs (21) sont des cylindres pneumatiques étant montés sur une barre horizontale supérieure (22) au-dessus dudit élément de support supérieur (14), et pourvus d'un trou traversant en correspondance de chaque piston (24), pour leur déplacement à l'intérieur du couteau cylindrique (25) de chaque unité de coupe (17).
